(19) Europäisches Patentamt
European Patent Office
Office européen des brevets

(11) **EP 4 104 946 A1**

(12) **EUROPEAN PATENT APPLICATION**
published in accordance with Art. 153(4) EPC

(43) Date of publication:
**21.12.2022 Bulletin 2022/51**

(51) International Patent Classification (IPC):
**B21D 22/00** $^{(2006.01)}$

(21) Application number: **20919234.3**

(52) Cooperative Patent Classification (CPC):
**B21D 22/00**

(22) Date of filing: **02.10.2020**

(86) International application number:
**PCT/JP2020/037620**

(87) International publication number:
**WO 2021/161579 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2020 JP 2020023153**

(71) Applicant: **JFE Steel Corporation**
**Tokyo 100-0011 (JP)**

(72) Inventors:
• **FUJII, Yusuke**
**Tokyo 100-0011 (JP)**
• **URABE, Masaki**
**Tokyo 100-0011 (JP)**
• **TOBITA, Shunsuke**
**Tokyo 100-0011 (JP)**

(74) Representative: **Grünecker Patent- und Rechtsanwälte**
**PartG mbB**
**Leopoldstraße 4**
**80802 München (DE)**

(54) **METHOD FOR PREDICTING SHAPE CHANGE OF PRESS-MOLDED PRODUCT**

(57)    A shape change prediction method for a press formed part according to the present invention predicts a shape change due to stress relaxation over time after a press formed part 1 having a punch shoulder 9 and/or a die shoulder 11 is released from a press-forming die and springs back, and includes a step of acquiring a shape and a residual stress of the press formed part 1 immediately after the springback by a springback analysis of the press formed part 1 (SI), a step of setting a value of residual stress, which is acquired by relaxation and reduction of a residual stress of the punch shoulder 9 and/or the die shoulder 11 of the press formed part 1 immediately after the springback, with respect thereto (S3), and a step of determining a shape in which moments of force are balanced with respect to the press formed part 1 in which the value of the residual stress in the punch shoulder 9 and/or the die shoulder 11 is relaxed, reduced, and set (S5).

FIG.1

**Description**

Field

The present invention relates to a shape change prediction method for a press formed part, and specifically relates to a shape change prediction method for a press formed part in which method a shape change of a press formed part after the press formed part is released from a press-forming die and springs back is predicted. Background

Press forming is a manufacturing method capable of manufacturing metal parts at a low cost in a short time, and is used for manufacturing of many automotive parts. In recent years, in order to achieve both improvement in collision safety of an automobile and weight reduction of an automotive body, a metal sheet having higher strength is used for press forming of the automotive parts.

One of main problems of a case where a high-strength metal sheet is press-formed is deterioration in dimensional accuracy of a press formed part due to springback. A phenomenon in which a residual stress generated in the press formed part when the metal sheet is deformed with a press-forming die by the press forming becomes a driving force and the press formed part released from the press-forming die instantaneously tries to return to a shape of the metal sheet before the press forming like a spring is called springback.

Since the residual stress of the press formed part which stress is generated by the press forming becomes large with respect to a metal sheet having high strength (such as high-tensile steel sheet), a shape change of the press formed part due to the springback also becomes large. Thus, it becomes difficult to keep the shape of the press formed part after the springback within a prescribed dimension as the metal sheet has higher strength. Thus, a technique of accurately predicting the shape change of the press formed part due to the springback is important.

A press forming simulation by a finite element method is generally used to predict the shape change of the press formed part due to the springback. A procedure in the press forming simulation is divided into a first stage in which a press forming analysis of a process of press forming a metal sheet up to a forming bottom dead center with a press-forming die is performed first and a residual stress generated in a press formed part is predicted (for example, Patent Literature 1), and a second stage in which a springback analysis in which a shape of a press formed part removed from a press-forming die is changed due to springback is performed and a shape of the press formed part with which shape a moment of force and a residual stress are balanced is predicted (for example, Patent Literature 2).

Citation List

Patent Literature

   Patent Literature 1: Japanese Patent No. 5795151
   Patent Literature 2: Japanese Patent No. 5866892
   Patent Literature 3: Japanese Patent Application Laid-open No. 2013-113144

Summary

Technical Problem

Hitherto, a shape of a press formed part immediately after a release from a press-forming die and springback has been predicted by a press forming simulation in which the above-described press forming analysis in the first stage and springback analysis in the second stage are integrated. However, when comparing a shape of a press formed part, which shape is predicted by the press forming simulation, with a shape of a press formed part that is actually press-formed, the inventors have found that there is a press formed part for which shape prediction accuracy by the press forming simulation is low.

Thus, the shape of the actual press formed part has been measured in order to investigate the press formed part for which the shape prediction accuracy by the press forming simulation is low and a cause thereof, and it has been found that shapes are different immediately after the press forming (immediately after the release from the press-forming die and the springback) and after several days.

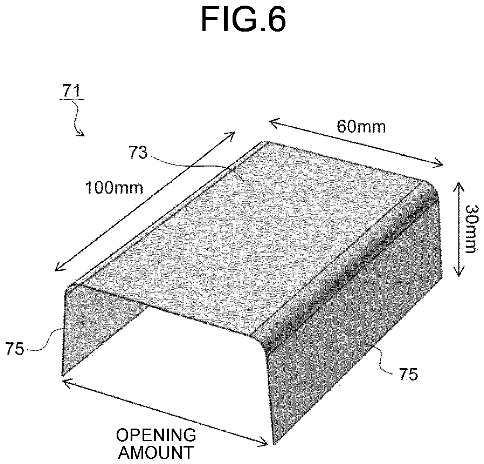

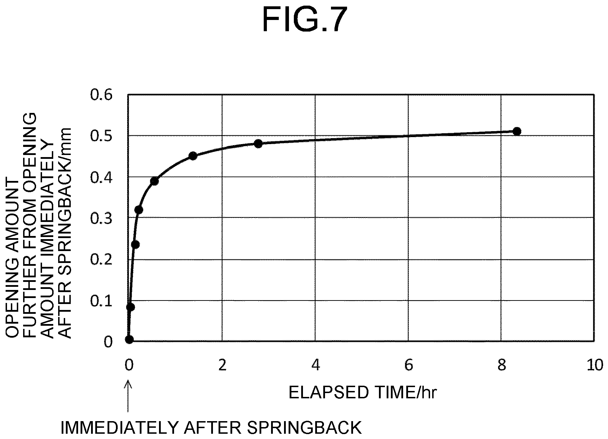

As an example in which the shape of the press forming changes over time, a result of measuring a shape change over time of a press formed part 71 having a U-shape cross-sectional shape including a top portion 73 and a pair of side wall portions 75 illustrated in FIG. 6 is illustrated in FIG. 7. As illustrated in FIG. 7, when an opening amount of the press formed part 71 immediately after the side wall portions 75 are opened and springback is generated at a moment of a release from a press-forming die is set to a reference (0 mm), it can be understood that a shape change in which the opening amount of the side wall portions 75 gradually increases is generated over time thereafter.

Although such a shape change of the press formed part over time seems to be similar to a phenomenon in which a structural member that keeps receiving a high press load from the outside gradually deforms, such as a creep phenomenon (for example, Patent Literature 3), a phenomenon in which the shape of the press formed part changes over time in a state in which no press load is applied from the outside has not been known until now.

Furthermore, since the second stage (springback analysis) in the conventional press forming simulation is to predict a shape of a press formed part immediately after springback at a moment of a removal from a press-forming die, there has been no study until now on prediction of the shape change of the sprung-back press formed part after several days. In addition, since the shape change of the sprung-back press formed part over time is generated without reception of the press load from the outside as described above, it is not possible to use, with respect to prediction of the shape change of such a press formed part over time, an analysis method of handling the shape change due to the creep phenomenon.

The present invention has been made to solve the above problems, and an object thereof is to propose a shape change prediction method for a press formed part in which method a shape change of a press formed part over time after the press formed part springs back at a moment of a release from a press-forming die is predicted.

Solution to Problem

The present invention specifically includes the following configurations.

A shape change prediction method according to the present invention for a press formed part for predicting a shape change of the press formed part over time after springback at a moment of a release from a press-forming die includes: a shape/residual stress immediately after the springback acquisition step of acquiring a shape and a residual stress of the press formed part immediately after the springback by a springback analysis of the press formed part; a residual stress relaxation/reduction setting step of setting a value of a residual stress relaxed and reduced from the acquired residual stress to all bent portions or a part of the bent portions in the press formed part immediately after the springback; and a shape analysis step of determining a shape in which moments of force are balanced for the press formed part in which the value of the residual stress relaxed and reduced in the bent portions is set.

In the above-described shape change prediction method, the bent portions are punch shoulders configured to connect a top portion and side wall portions in the press formed part including the top portion and the side wall portions.

In the above-described shape change prediction method, the bent portions are punch shoulders configured to connect a top portion and side wall portions and/or die shoulders configured to connect the side wall portions and the flange portions in the press formed part including the top portion, the side wall portions, and flange portions.

In the above-described shape change prediction method, a blank used for press forming of the press formed part is a metal sheet having tensile strength of a 150 MPa grade or higher and a 2000 MPa grade or lower. Advantageous Effects of Invention

In the present invention, a shape/residual stress immediately after the springback acquisition step in which step a shape and a residual stress of a press formed part immediately after the springback are acquired by a springback analysis of the press formed part, a residual stress relaxation/reduction setting step of setting, with respect to all or a part of bent portions in the acquired press formed part immediately after the springback, a value of a residual stress relaxed and reduced from a residual stress thereof, and a shape analysis step of determining a shape in which moments of force are balanced with respect to the press formed part in which the value of the residual stress is relaxed, reduced, and set are included. Thus, a shape change in the bent portion of the press formed part after a release from a press-forming die and the springback can be accurately predicted. As a result, it is possible to acquire a press formed part having more excellent dimensional accuracy than conventional one and to significantly improve manufacturing efficiency in a manufacturing process of an automotive part, an automotive body, or the like.

Brief Description of Drawings

FIG. 1 is a flowchart illustrating a flow of processing of a shape change prediction method for a press formed part according to an embodiment of the present invention.

FIG. 2 is a view illustrating a press formed part that has a hat-shaped cross-sectional shape and that is an object in the embodiment and a first example of the present invention ((a) perspective view, and (b) top view).

FIG. 3 is a view illustrating a press formed part that has a Z-shape cross-sectional shape and that is an object in a second example ((a) perspective view, and (b) top view).

FIG. 4 is a view illustrating a press formed part that has an L-shape cross-sectional shape and that is an object in a third example.

FIG. 5 is a view illustrating a press formed part that is an object in a fourth example ((a) perspective view, and (b) top view).

FIG. 6 is a view illustrating a press formed part that has a U-shape cross-sectional shape and that is an example of a measurement object of a shape change over time.

FIG. 7 is a view illustrating, as an example of the shape change of the press formed part over time, a measurement result of an opening amount over time after the press formed part that has the U-shape cross-sectional shape and that is illustrated in FIG. 6 is released from a press-forming die and springs back.

FIG. 8 is a stress-strain diagram for describing a stress relaxation phenomenon in which stress is relaxed and reduced over time in a state in which strain is kept constant.

FIG. 9 is a view for describing a stress and a shape change in a punch shoulder of the press formed part having the hat-shaped cross-sectional shape ((a) immediately after press forming, (b) immediately after springback, and (c) after elapse of time).

FIG. 10 is a view for describing a change in a bent angle due to stress relaxation in the punch shoulder and a die shoulder of the press formed part having the hat-shaped cross-sectional shape.

Description of Embodiments

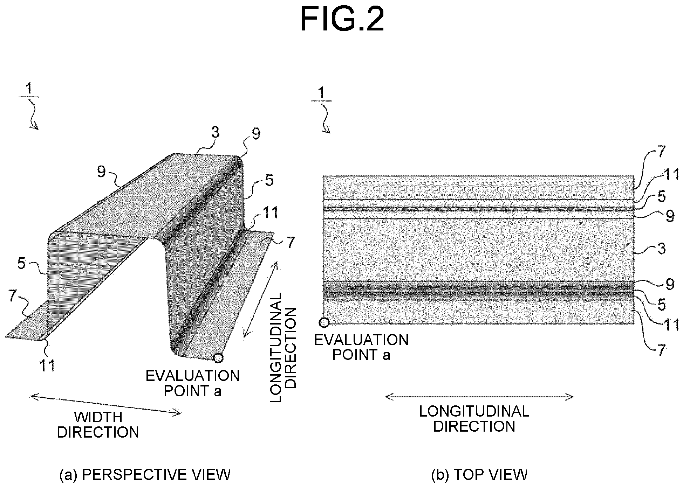

In order to solve the above-described problems and to establish, with respect to a press formed part having a bent portion, a method of predicting a shape change of the press formed part over time after a release from a press-forming die and springback, the inventors have conducted, as a preliminary stage thereof, various studies on a cause of the shape change over time with respect to a press formed part 1 that has a hat-shaped cross-sectional shape and that is in a manner of being exemplified in FIG. 2.

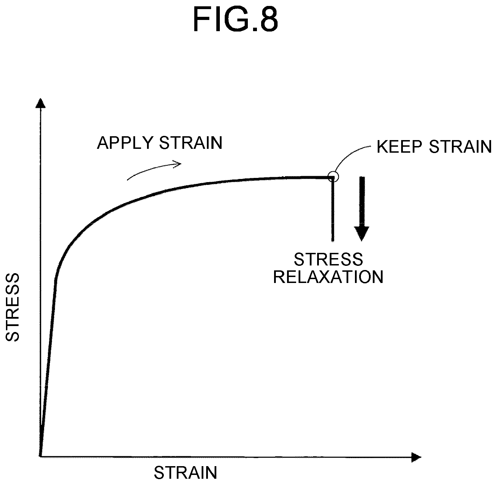

As a result, the inventors have focused on a stress relaxation phenomenon in which stress is gradually relaxed and reduced over time while strain is kept constant in a stress-strain diagram in a manner illustrated in FIG. 8, and have found that a shape balanced with a moment of force of the press formed part 1 changes as residual stresses in a punch shoulder 9 and a die shoulder 11 bent by press forming are gradually relaxed over time also in the press formed part 1 after the springback.

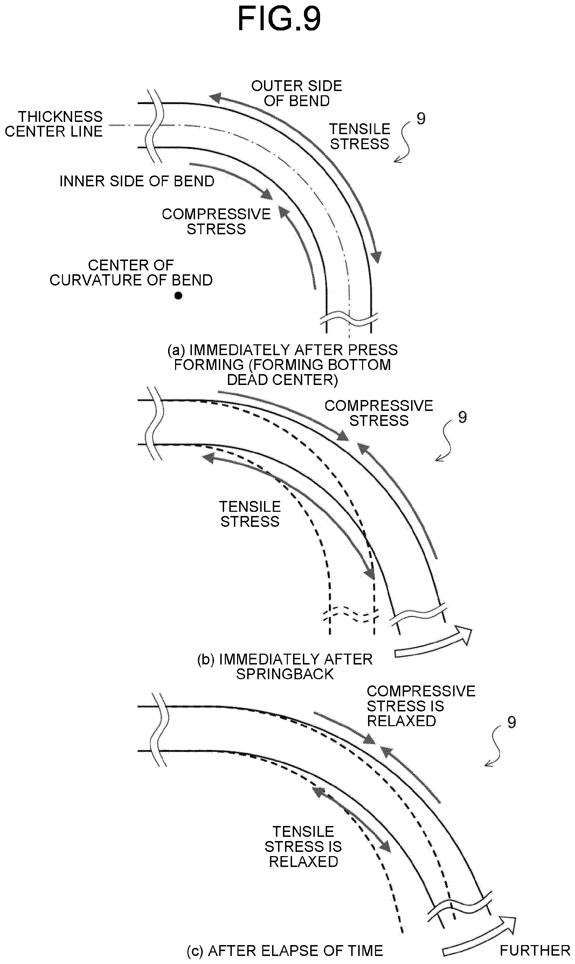

The shape change due to the relaxation of the residual stresses in the punch shoulder 9 and the die shoulder 11 that are bent portions of the press formed part 1 will be described with reference to the schematic diagram illustrated in FIG. 9. Note that although an example of a cross-sectional shape and the residual stress of the punch shoulder 9 is illustrated in FIG. 9, similar relaxation of the residual stress and shape change are generated also in the die shoulder 11.

First, at the time of press forming, when a blank (such as metal sheet) is press-formed up to a forming bottom dead center with a press-forming die including a punch and a die, the punch shoulder 9 is formed as illustrated in FIG. 9(a). Thus, a tensile stress is generated on an outer side of a bend of the punch shoulder 9 and a compressive stress is generated on an inner side of the bend. Note that the outer side of the bend is a side opposite to a center of a curvature of the bend with respect to a line at a center of a thickness in a cross section of the bent portion, and the inner side of the bend is the same side as the center of the curvature of the bend (same applies hereinafter).

Then, when the press formed part 1 is removed (released) from the press-forming die, springback of the press formed part 1 is instantaneously generated with the residual stress generated during the press forming as a driving force. At this time, as illustrated in FIG. 9(b), the bent angle of the punch shoulder 9 changes in such a manner as to return to a shape of the flat blank before the press forming. However, since the punch shoulder 9 has rigidity, force to return to the shape before the press forming is hindered, whereby the compressive stress is generated on the outer side of the bend and the tensile stress is generated on the inner side of the bend.

Then, as illustrated in FIG. 9(c), the force to return to the shape before the press forming is gradually weakened over time without being forced from the outside, and the shape is balanced with the moment of force in the press formed part 1, whereby the bent angle changes in such a manner that the bend is further increased in the punch shoulder 9.

That is, when the press formed part springs back from the bottom dead center after the press forming, a residual stress is generated therein at the time point. With respect to the generated residual stress, for a difference between a residual stress on a front side and a residual stress on a back side in a thickness direction, the difference between the residual stress on the front side and the residual stress on the back side in the thickness direction of the press formed part is relaxed and reduced with the lapse of time units. As a result, it has been found that a processed portion of the press formed part has a shape having a less residual stress than the shape immediately after the springback.

This phenomenon is quite different from a behavior of the conventional springback due to the residual stress reduction. In the behavior of the conventional springback, with respect to the residual stress generated at the bottom dead center after the press forming, when a value of the residual stress to be generated is forcibly reduced or a difference between the residual stresses to be generated on the front side and the back side of the press formed part is forcibly reduced by a specific means, the springback is controlled and the shape at the press forming bottom dead center is kept in the state after the press forming.

On the other hand, in a behavior of the stress relaxation that is the object of the present invention, since an already-existing residual stress is relaxed without being forced by the outside after the springback from the bottom dead center after the press forming is generated, there is an attempt to return to a state with no residual stress. As a result, for example, the bent angle and a curl become larger than those immediately after the springback, and the shape of the press formed part becomes further away from a target shape.

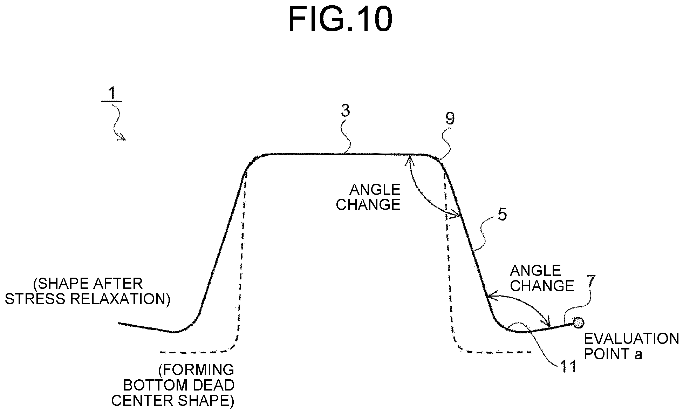

Then, in such a press formed part 1 having the hat-shaped cross-sectional shape, even when a measure against the springback generated instantaneously is sufficiently taken, a change in the bent angle is generated due to the stress relaxation over time in both the punch shoulder 9 and the die shoulder 11, as illustrated in FIG. 10. Thus, in a flange portion 7 of the press formed part 1, a deviation from a shape at the forming bottom dead center is generated.

Thus, on the basis of the above new findings, the inventors have studied a method of predicting a shape change of the press formed part 1 due to the stress relaxation after the springback in a manner illustrated in FIG. 2, for example. As a result, it has been found that it is possible to predict the shape change of the press formed part 1 over time by further performing an analysis in a third stage in which the residual stress of at least one of the punch shoulder 9 and the die shoulder 11 of the press formed part 1 immediately after the springback, which part is acquired in the second stage (springback analysis) of the press forming simulation described above, is relaxed and reduced and a shape balanced with the moment of force of the press formed part 1 is determined.

Furthermore, it has been found that the shape prediction method is not limited to the press formed part 1 having the hat-shaped cross-sectional shape in a manner illustrated in FIG. 2 and a shape change over time after springback can be predicted as long as a press formed part is one having a bent portion.

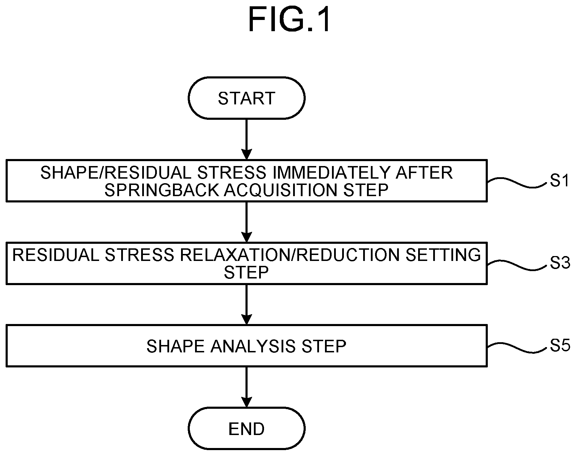

A shape change prediction method for a press formed part according to an embodiment of the present invention is to predict a shape change of a press formed part over time after the press formed part springs back at a moment of a release from a press-forming die. As illustrated in FIG. 1, a shape/residual stress immediately after the springback acquisition step S1, a residual stress relaxation/reduction setting step S3, and a shape analysis step S5 are included. Hereinafter, each of the above steps will be described with a press formed part 1 that has a hat-shaped cross-sectional shape including a top portion 3, side wall portions 5, and flange portions 7 and that includes, as bent portions, punch shoulders 9 that respectively connect sides of the top portion 3 and upper sides of the side wall portions 5, and die shoulders 11 that respectively connect bottom sides of the side wall portions 5 and sides of the flange portions 7 in a manner illustrated in FIG. 2 being an example. Note that dimensions, other specific numerical values, and the like in the specification and drawings of the present application are merely specific examples for describing the present invention, and do not limit the present invention.

<Shape/residual stress immediately after springback acquisition step >

The shape/residual stress immediately after the springback acquisition step S1 is a step of acquiring, by the springback analysis of the press formed part 1, the shape and the residual stress of the press formed part 1 immediately after the springback.

As an example of specific processing of acquiring the shape and the residual stress of the press formed part 1 immediately after the springback, there is a press forming simulation by a finite element method including a first stage in which a press forming analysis of a process of press forming a metal sheet up to a forming bottom dead center is performed with a press-forming die model acquired by modeling of a press-forming die used for press forming of the actual press formed part 1 and the press formed part 1 at the forming bottom dead center is determined, and a second stage in which a springback analysis to determine a shape, in which moments of force are balanced, and a residual stress of the press formed part 1 immediately after the determined press formed part 1 at the forming bottom dead center is released from the press-forming die model is performed.

<Residual stress relaxation/reduction setting step>

The residual stress relaxation/reduction setting step S3 is a step of setting, with respect to the punch shoulders 9 and the die shoulders 11 of the press formed part 1 immediately after the springback which part is acquired in the shape/residual stress immediately after the springback acquisition step S1, values of residual stresses relaxed and reduced from the residual stresses thereof.

<Shape analysis step>

The shape analysis step S5 is a step of performing an analysis to determine a shape in which moments of force are balanced with respect to the press formed part 1 in which the residual stresses are relaxed, reduced, and set in the residual stress relaxation/reduction setting step S3.

According to such a shape change prediction method for a press formed part according to the present embodiment, the values of the residual stresses relaxed and reduced from the residual stresses of the punch shoulders 9 and the die shoulders 11, which are bent portions of the press formed part 1 immediately after the springback which part is acquired by the springback analysis, are set with respect thereto and the shape balanced with the moment of force is determined by analysis with respect to the press formed part 1 in which the values of the residual stresses are relaxed, reduced, and set. Thus, it is possible to simulate the stress relaxation and the shape change over time in the actual press formed part 1, and to predict the shape change of the press formed part 1 over time after the springback is generated at the moment of the release from the press-forming die.

In the above description, the values of the residual stresses relaxed and reduced from the residual stresses of all the bent portions, that is, the punch shoulders 9 and the die shoulders 11 in the press formed part 1 immediately after the springback, which part is acquired by the springback analysis, are set with respect thereto. However, in the present invention, with respect to a part of the bent portions, that is, either one of the punch shoulders 9 or the die shoulders 11 in the press formed part 1, or a part of punch shoulders 9 and die shoulders 11 in a part having the plurality of punch shoulders 9 and die shoulders 11, a value relaxed and reduced from a residual stress thereof may be set.

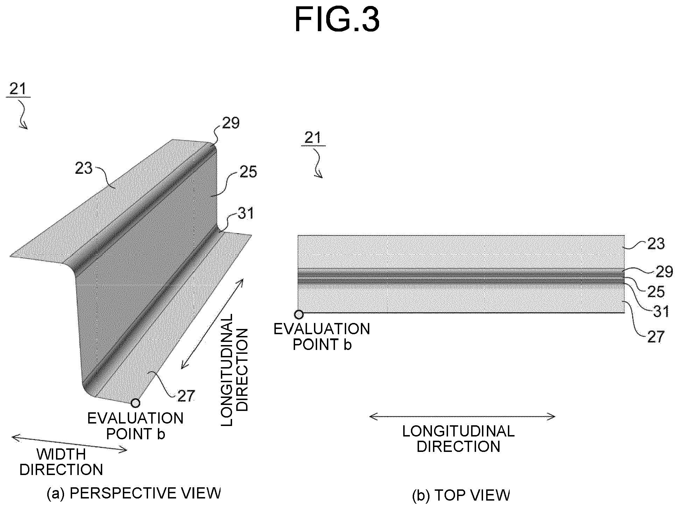

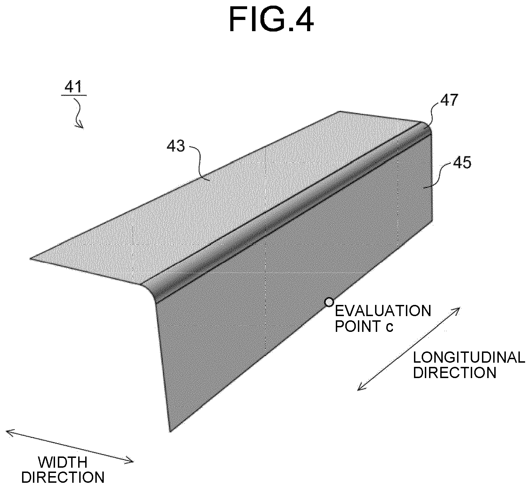

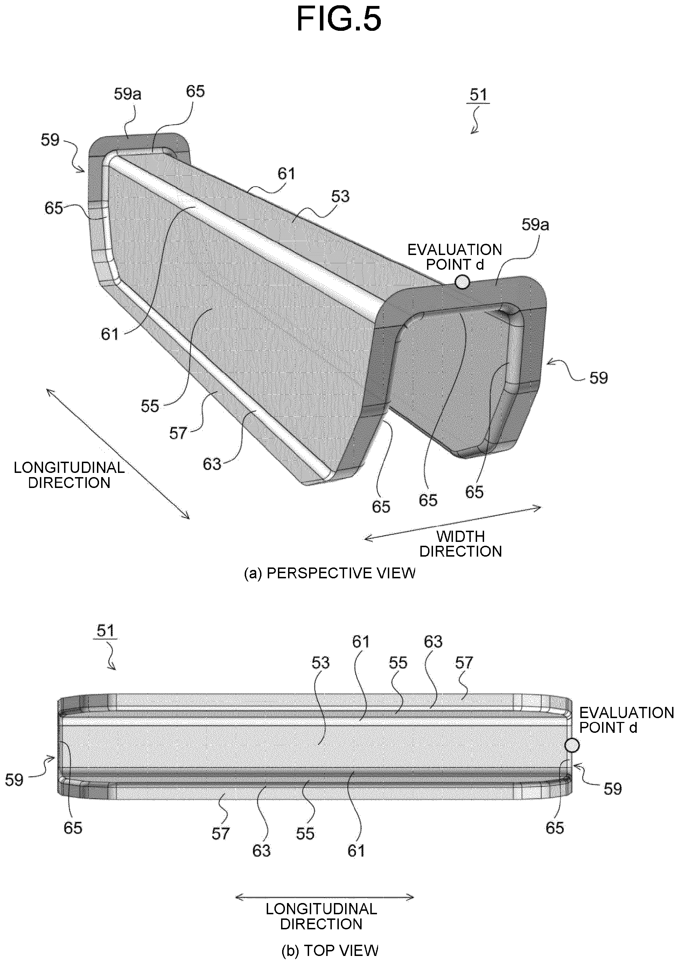

However, an object of the present invention is not limited to the press formed part 1 having the hat-shaped cross-sectional shape in a manner illustrated in FIG. 2. For example, a press formed part 21 having a Z-shape cross-sectional shape in a manner illustrated in FIG. 3, a press formed part 41 having an L-shape cross-sectional shape in a manner illustrated in FIG. 4, and a press formed part 51 having a shape simulating a cross member of an automobile in a manner illustrated in FIG. 5 are also objects. Results of application of the present invention to the press formed parts having these shapes and prediction of shape changes of the press formed parts over time after springback will be described in first to fourth examples (described later).

Furthermore, a press formed part of an object of the present invention may be any press formed part as long as a bent portion in which a metal sheet is bent and a tensile stress is generated on an outer side of a bend and a compressive stress is generated on an inner side of the bend is included at a forming bottom dead center of press forming, and a shape change of the press formed part can be predicted by simulation of stress relaxation over time after springback.

Furthermore, in the shape change prediction method for a press formed part according to the present invention, although a shape, a kind, and the like of a metal sheet used as a blank for the press forming of the press formed part, and the press formed part are not specifically limited, the shape change prediction method is more effective for an automotive part press formed by utilization of a metal sheet with which the press formed part has a higher residual stress.

Specifically, the blank is preferably a metal sheet having tensile strength of a 150 MPa grade or higher and a 2000 MPa grade or lower and a thickness of 0.5 mm or more and 4.0 mm or more.

Since a blank having tensile strength lower than the 150 MPa grade is hardly used for the press formed part, there is little advantage of using the shape change prediction method for a press formed part according to the present invention. With respect to a part in which a blank having tensile strength of the 150 MPa grade or higher is used and which has low rigidity, such as an outer panel of an automobile, a shape change due to a change in residual stress is likely to be generated. Thus, there are many advantages of applying the present invention and the present invention can be suitably applied.

On the other hand, since a metal sheet having tensile strength exceeding the 2000 MPa grade has poor elongation, for example, there is a case where a crack is generated in the press forming process in the punch shoulders 9 and the die shoulders 11 in the press formed part 1 having the hat-shaped cross-sectional shape in a manner illustrated in FIG. 2 and the press forming cannot be performed.

In addition, with respect to the shape of the press formed part, for example, it is desirable to apply the present invention to a press formed part having a shape in which a residual stress in a bent portion is high, such as a press formed part having a U-shape cross-sectional shape or a hat-shaped cross-sectional shape.

Thus, as the kind of the press formed part, it is preferable to apply the present invention to automotive parts such as outer panels such as a door, roof, and hood having low rigidity, and frame parts such as an A pillar, B pillar, roof rail, side rail, front side member, rear side member, and cross member using a high-strength metal sheet.

Note that the present invention can be applied to a press formed part press-formed by crash forming, bend forming, or deep drawing, and a press method of the press formed part is not limited.

[First example]

<Press formed part having a hat-shaped cross-sectional shape>

In the first example, first, press forming of the press formed part 1 having the hat-shaped cross-sectional shape illustrated in FIG. 2 was performed by bend forming by utilization of a metal sheet A having mechanical properties exemplified in Table 1 below. In a forming bottom dead center shape of the press formed part 1, a radius of curvature and a bent angle of the punch shoulders 9 were respectively set to 5 mm and 95°, and a radius of curvature and a bent angle of the die shoulders 11 were respectively set to 5 mm and 95°. Note that a thickness of the metal sheet A is 1.6 mm, yield strength is 880 MPa, tensile strength is 1210 MPa, and elongation is 13%.

Table 1

|  | Thickness/mm | Yield strength/MPa | Tensile strength/MPa | Elongation/% |
|---|---|---|---|---|
| Metal sheet A | 1.6 | 880 | 1210 | 13 |

Then, the press formed part 1 that was press-formed up to the forming bottom dead center was released from a press-forming die, and then a change in the shape of the press formed part 1 over time was measured.

Then, an analysis for predicting the shape change of the press formed part 1 was performed. In the analysis, first, a press forming analysis in which the metal sheet A was press-formed up to the forming bottom dead center was performed by utilization of a press-forming die model acquired by modeling of the press-forming die used for the press forming, and a residual stress of the press formed part 1 at the forming bottom dead center was determined.

Subsequently, a springback analysis was performed and the shape and the residual stress of the press formed part 1 immediately after the press formed part 1 at the forming bottom dead center was released from the press-forming die model were determined.

Furthermore, with respect to the punch shoulders 9 and/or the die shoulders 11 of the press formed part 1 immediately after springback which part was acquired by the springback analysis, values of residual stresses acquired by relaxation and reduction of residual stresses thereof at a predetermined rate were set. Then, an analysis to determine a shape in which moments of force were balanced was performed with respect to the press formed part 1 in which the residual stresses were relaxed and reduced.

In the first example, those acquired by setting of values of residual stresses, which values were acquired by relaxation and reduction of the residual stresses immediately after the springback at a predetermined rate (reduction rate of residual stress), with respect to the punch shoulders 9 and/or the die shoulders 11 of the press formed part 1 acquired by the springback analysis were set as a first invention example to a fourth invention example.

In addition, as comparative objects, an example in which an analysis to determine a shape in which moments of force were balanced was not performed after the press forming analysis and the springback analysis of the press formed part 1 were performed similarly to the first invention example to the fourth invention example was set as a first comparison example, and an example in which an analysis to determine a shape in which moments of force were balanced was performed without relaxation and reduction of the residual stresses of the punch shoulders 9 and the die shoulders 11 in the press formed part 1 after the springback analysis was performed was set as a second comparison example.

For each of the first invention example to fourth invention example, the first comparative example, and the second comparison example, a deviation amount from the shape of the press formed part 1 at the forming bottom dead center at a leading end in a longitudinal direction (evaluation point a) of one of the flange portions 7 of the press formed part 1 was calculated. In Table 2, portions where residual stresses were relaxed and reduced, reduction rates, and results of deviation amounts of the evaluation point a in the first invention example to the fourth invention example, the first comparison example, and the second comparison example are collectively illustrated.

Table 2

|  | Reduction rate of residual stress/% | | Deviation amount of evaluation point a | | |
|---|---|---|---|---|---|
|  | Punch shoulder portion | Die shoulder portion | Prediction value Dc/mm | Difference between experimental value (after lapse of two days) De and prediction value Dc/mm | Error rate of prediction value Dc with respect to experimental value (after lapse of two days) De/% |
| First comparison example | - | - | 14.5 | 1.5 | 10.3% |
| Second comparison example | 0 | 0 | ↑ | ↑ | ↑ |

(continued)

| | Reduction rate of residual stress/% | | Deviation amount of evaluation point a | | |
|---|---|---|---|---|---|
| | Punch shoulder portion | Die shoulder portion | Prediction value Dc/mm | Difference between experimental value (after lapse of two days) De and prediction value Dc/mm | Error rate of prediction value Dc with respect to experimental value (after lapse of two days) De/% |
| First invention example | 5 | 0 | 15.1 | 0.9 | 6.0% |
| Second invention example | 10 | 10 | 15.5 | 0.5 | 3.2% |
| Third invention example | 20 | 20 | 15.8 | 0.2 | 1.3% |
| Fourth invention example | 30 | 20 | 16.2 | -0.2 | -1.2% |

In and after Table 2, in a case where the center of the top portion 3 of the press formed part 1 in the longitudinal direction is made to match, a prediction value Dc is a deviation amount of the evaluation point a in each of the first invention example to fourth invention example, the first comparison example, and the second comparison example, and an experimental value De is a deviation amount of the evaluation point a after the lapse of two days in a cross section in a width direction parallel to the top portion 3 of the press formed part 1 that is actually press-formed (= 16 mm). In addition, a difference and an error rate of the prediction value with respect to the experimental value are respectively calculated by the following equations.

$$\text{Difference in the prediction value (mm)} = De - Dc \quad (1)$$

$$\text{Error rate of the prediction value (\%)} = (De - Dc)/Dc \times 100 \quad (2)$$

The deviation amounts of the evaluation point a in the first comparison example and the second comparison example were equal, the differences from the experimental value being 1.5 mm and the error rates of the prediction values being 10.3%.

In the first invention example, only for the punch shoulders 9, a value of a residual stress acquired by relaxation and reduction of the residual stress thereof by 5% was set. The difference in the prediction value was 0.9 mm and the error rate of the prediction value was 6.0%, and there was an improvement compared to the first comparison example and the second comparison example. In the second invention example, values of stresses acquired by reduction of the residual stresses of both the punch shoulders 9 and the die shoulders 11 by 10% respectively were set for the two respectively. The difference in the prediction value was 0.5 mm and the error rate of the prediction value was 3.2%. Thus, there was an improvement compared to the first comparison example and the second comparison example, and the result was better than that of the first invention example. In the third invention example, values of residual stresses acquired by reduction of the residual stresses of both the punch shoulders 9 and the die shoulders 11 by 20% respectively were set for the two respectively. The difference in the prediction value was 0.2 mm and the error rate of the prediction value was 1.3%. Thus, there was an improvement compared to the first comparison example and the second comparison example, and the result was better than that of the second invention example. In the fourth invention example, values of residual stresses acquired by reduction of the residual stresses of the punch shoulders 9 and the die shoulders 11 by 30% and 20% respectively were set for the two respectively. The difference in the prediction value was - 0.2 mm and the error rate of the prediction value was - 1.2%. Although the both were negative values, when absolute values were compared, there was an improvement compared to the first comparison example and the second comparison example

and the result was equivalent to that of the third invention example.

[Second example]

<Press formed part having a Z-shape cross-sectional shape>

In the second example, first, press forming of a press formed part 21 having a Z-shape cross-sectional shape illustrated in FIG. 3 was performed by bend forming by utilization of a metal sheet A having the mechanical properties illustrated in Table 1 was used similarly to the first example described above. In a forming bottom dead center shape of the press formed part 21, a radius of curvature and a bent angle of a punch shoulder 29 were respectively set to 7 mm and 100°, and a radius of curvature and a bent angle of a die shoulder 31 were respectively set to 7 mm and 100°.

Then, the press formed part 21 that was press-formed up to the forming bottom dead center was released from a press-forming die, and a change in the shape of the press formed part 21 over time was measured.

Then, an example in which a press forming analysis and a subsequent springback analysis of the press formed part 21 were performed, values of residual stresses acquired by relaxation and reduction of residual stresses of the punch shoulder 29 and the die shoulder 31 in the press formed part 21 immediately after springback by 20% were set with respect thereto respectively, and an analysis to determine a shape in which moments of force were balanced was performed with respect to the press formed part 21 was set as a fifth invention example. Furthermore, as a comparative object, an example in which an analysis to relax, reduce, and set a value of residual stress and to determine a shape in which moments of force were balanced was not performed after the press forming analysis and the springback analysis of the press formed part 21 were performed similarly to the fifth invention example was set as a third comparison example.

Then, for each of the fifth invention example and the third comparison example, a deviation amount from the shape of the press formed part 21 at the forming bottom dead center at a leading end in a longitudinal direction (evaluation point b) of a flange portion 27 of the press formed part 21 was calculated. Note that a center of a top portion 23 of the press formed part 21 in a longitudinal direction was made to match and a distance in a cross section in a width direction parallel to the top portion 23 was used as the deviation amount similarly to the first example. In Table 3, portions where residual stresses were relaxed and reduced, reduction rates, and results of deviation amounts of the evaluation point b in the fifth invention example and the third comparison example are collectively illustrated.

Table 3

| | Reduction rate of residual stress/% | | Deviation amount of evaluation point b | | |
|---|---|---|---|---|---|
| | Punch shoulder portion | Die shoulder portion | Prediction value Dc/mm | Difference between experimental value (after lapse of two days) De and prediction value Dc/mm | Error rate of prediction value Dc with respect to experimental value (after lapse of two days) De/% |
| Third comparison example | - | - | 13.3 | 1.2 | 9.0% |
| Fifth invention example | 20 | 20 | 14.1 | 0.4 | 2.8% |

In Table 3, a prediction value Dc is the deviation amount of the evaluation point b in each of the fifth invention example and the third comparison example, and an experimental value De is a deviation amount of the evaluation point b after the lapse of two days of the press formed part 21 that is actually press-formed (= 14.5 mm). In addition, a difference and an error rate of the prediction value with respect to the experimental value are respectively calculated by the equations (1) and (2) described above.

In the third comparison example, the difference between the prediction value and the experimental value was 1.2 mm, and the error rate of the prediction value was 9.0%. In the fifth invention example, the residual stresses of both the punch shoulder 29 and the die shoulder 31 were relaxed and reduced by 20%. The difference from the experimental value was 0.4 mm and the error rate of the prediction value was 2.8%. Thus, there was an improvement compared to the third comparison example.

[Third example]

<Press formed part having an L-shape cross-sectional shape>

In the third example, first, press forming of a press formed part 41 having an L-shape cross-sectional shape illustrated in FIG. 4 was performed by bend forming by utilization of a metal sheet A having the mechanical properties illustrated in Table 1 given above. In a forming bottom dead center shape of the press formed part 41, a radius of curvature and a bent angle of a punch shoulder 47 were set to 6 mm and 120°. Then, the press formed part 41 that was press-formed up to the forming bottom dead center was released from a press-forming die, and then a change in the shape of the press formed part 41 over time was measured.

Then, similarly to the first example described above, an example in which a value of a residual stress acquired by relaxation and reduction of a residual stress of the punch shoulder 47 in the press formed part 41 immediately after springback was set with respect thereto and an analysis to determine a shape in which moments of force were balanced was performed with respect to the press formed part 41 after a press forming analysis and a subsequent springback analysis of the press formed part 41 were performed was set as a sixth invention example. Furthermore, as a comparative object, an example in which an analysis to relax and reduce a value of residual stress and to determine a shape in which moments of force were balanced was not performed after the press forming analysis and the springback analysis of the press formed part 41 were performed similarly to the sixth invention example was set as a fourth comparison example.

Then, for each of the sixth invention example and the fourth comparison example, a deviation amount from the forming bottom dead center shape at a center of a bottom side of a side wall portion 45 in a longitudinal direction (evaluation point c, see FIG. 4) was calculated. Note that a center of a top portion 43 of the press formed part 41 in the longitudinal direction was made to match and a distance in a cross section in a width direction parallel to the top portion 43 was used as the deviation amount similarly to the first example. In Table 4, reduction rates of the residual stress, and results of the deviation amounts of the evaluation point d in the sixth invention example and the fourth comparison example are collectively illustrated.

Table 4

| | Reduction rate of residual stress/% | Deviation amount of evaluation point c | | |
|---|---|---|---|---|
| | Punch shoulder portion | Prediction value Dc/mm | Difference between experimental value (after lapse of two days) De and prediction value Dc/mm | Error rate of prediction value Dc with respect to experimental value (after lapse of two days) De/% |
| Fourth comparison example | - | 15.7 | 3.8 | 24.2% |
| Sixth invention example | 20 | 18.4 | 1.1 | 6.0% |

In Table 4, a prediction value Dc is the deviation amount of the evaluation point c in each of the sixth invention example and the fourth comparison example, and an experimental value De is a deviation amount of the evaluation point c after the lapse of two days of the press formed part 41 that is actually press-formed (= 19.5 mm). In addition, a difference and an error rate of the prediction value with respect to the experimental value are respectively calculated by the equations (1) and (2) described above.

In the fourth comparison example, the difference between the prediction value and the experimental value was 3.8 mm, and the error rate of the prediction value was 24.2%. In the sixth invention example, the residual stress of the punch shoulder 47 was relaxed and reduced by 20%. The difference from the experimental value was 1.1 mm and the error rate of the prediction value was 6.0%. Thus, there was an improvement compared to the fourth comparison example.

[Fourth example]

<Floor cross member>

In the fourth example, first, press forming of a press formed part 51 having a shape simulating a floor cross member of an automobile in a manner illustrated in FIG. 5 was performed by bend forming by utilization of a metal sheet A having the mechanical properties illustrated in Table 1 given above. The press formed part 51 is provided with a mounting flange portion 59 that is bent and extended outward from an end side in a longitudinal direction of each of a top portion 53, a side wall portion 55, and a flange portion 57, and includes, as bent portions, a punch shoulder 61 that connects the top portion 53 and the side wall portion 55, and a die shoulder 63 that connects a bottom side of the side wall portion 55 and a side of the flange portion 57 and connects the end sides in the longitudinal direction of the top portion 53, the side wall portion 55, and the flange portion 57 and the mounting flange portion 59.

In a forming bottom dead center shape of the press formed part 51, a radius of curvature and a bent angle of the punch shoulder 61 were respectively set to 5 mm and 90°, and a radius of curvature and a bent angle of the die shoulder 63 were respectively set to 4 mm and 90°.

Then, the press formed part 51 that was press-formed up to the forming bottom dead center was released from a press-forming die, and a change in the shape of the press formed part 51 over time was measured.

Then, examples in which a press forming analysis and a subsequent springback analysis of the press formed part 51 were performed, values of residual stresses acquired by relaxation and reduction of residual stresses of the punch shoulder 61 and/or the die shoulder 63 in the press formed part 51 immediately after springback were set with respect thereto, and an analysis to determine a shape in which moments of force were balanced was performed with respect to the press formed part 51 were set as a seventh invention example and an eighth invention example.

Note that in the press formed part 51, the mounting flange portion 59 is formed in such a manner as to be continuous along three end sides of the top portion 53, the side wall portion 55, and the flange portion 57 in the longitudinal direction, the punch shoulder 61 connects a side of the top portion 53 and an upper side of the side wall portion 55, the die shoulder 63 has a portion connecting the bottom side of the side wall portion 55 and the side of the flange portion 57, and a longitudinal-direction end-portion mounting portion 65 has a portion connecting the end sides in the longitudinal direction of the top portion 53, the side wall portion 55, and the flange portion 57 and the mounting flange portion 59.

Furthermore, as a comparative object, an example in which an analysis to relax and reduce a value of residual stress and to determine a shape in which moments of force were balanced was not performed for either the punch shoulder 61 or the die shoulder 63 after the press forming analysis and the springback analysis of the press formed part 51 were performed similarly to the seventh invention example and the eighth invention example was set as a fifth comparison example.

Then, for each of the seventh invention example, the eighth invention example, and the fifth comparison example, a deviation amount from a forming bottom dead center shape at an upper end (evaluation point d, see FIG. 4) of a top-side mounting flange portion 59a that was bent upward and continuous from the end side in the longitudinal direction of the top portion 53 was calculated. Note that a center of a top portion 53 of the press formed part 51 in the longitudinal direction was made to match and a distance in a cross section in a width direction parallel to the top portion 53 was used as the deviation amount similarly to the first example. In Table 5, portions where residual stresses were relaxed and reduced, reduction rates, and results of the deviation amounts of the evaluation point d in the seventh invention example, the eighth invention example, and the fifth comparison example are collectively illustrated.

Table 5

| | Reduction rate of residual stress/% | | Deviation amount of evaluation point d | | |
| --- | --- | --- | --- | --- | --- |
| | Punch shoulder portion | Die shoulder portion | Prediction value Dc/mm | Difference between experimental value (after lapse of two days) De and prediction value Dc/mm | Error rate of prediction value Dc with respect to experimental value (after lapse of two days) De/% |
| Fifth comparison example | - | - | 3.5 | 0.9 | 25.7% |
| Seventh invention example | 5 | 0 | 4.1 | 0.3 | 7.3% |

(continued)

| | Reduction rate of residual stress/% | | Deviation amount of evaluation point d | | |
| --- | --- | --- | --- | --- | --- |
| | Punch shoulder portion | Die shoulder portion | Prediction value Dc/mm | Difference between experimental value (after lapse of two days) De and prediction value Dc/mm | Error rate of prediction value Dc with respect to experimental value (after lapse of two days) De/% |
| Eighth invention example | 10 | 10 | 4.2 | 0.2 | 4.8% |

In Table 5, a prediction value Dc is the deviation amount of the evaluation point d in each of the seventh invention example, the eighth invention example, and the fifth comparison example, and an experimental value De is a deviation amount of the evaluation point d after the lapse of two days of the press formed part 51 that is actually press-formed (= 4.4 mm). In addition, a difference and an error rate of the prediction value with respect to the experimental value are respectively calculated by the equations (1) and (2) described above.

In the fifth comparison example, the difference between the prediction value and the experimental value was 0.9 mm, and the error rate of the prediction value was 25.7%. In the seventh invention example, the residual stress of only the punch shoulder 61 was reduced by 5%. The difference from the experimental value was 0.3 mm and the error rate of the prediction value was 7.3%. Thus, there was an improvement compared to the fifth comparison example.

In the eighth invention example, the residual stresses of the punch shoulder 61 and the die shoulder 63 were reduced by 10%. The difference from the experimental value was 0.2 mm and the error rate of the prediction value was 4.8%. Thus, there was a further improvement compared to the fifth comparison example.

Note that in the seventh invention example, since the shape change was determined while the residual stress of only the punch shoulder 61 was relaxed and reduced, an angle change due to the stress relaxation of the punch shoulder 61 does not directly contribute to the shape change of the top-side mounting flange portion 59a. However, even in a case where the residual stress of the punch shoulder 61 was relaxed and reduced, a shape in which moments of force of the entire press formed part 51 were balanced was acquired. Thus, there was a contribution to the shape change of the top-side mounting flange portion 59a, and the deviation amount of the evaluation point d was improved.

Industrial Applicability

According to the present invention, it is possible to provide a shape change prediction method for a press formed part which method predicts a shape change in a press formed part over time after the press formed part springs back at a moment of a release from a press-forming die.

Reference Signs List

1    PRESS FORMED PART

3    TOP PORTION
5    SIDE WALL PORTION
7    FLANGE PORTION
9    PUNCH SHOULDER
11    DIE SHOULDER
21    PRESS FORMED PART
23    TOP PORTION
25    SIDE WALL PORTION
27    FLANGE PORTION
29    PUNCH SHOULDER
31    DIE SHOULDER
41    PRESS FORMED PART
43    TOP PORTION

| | |
|---|---|
| 45 | SIDE WALL PORTION |
| 47 | PUNCH SHOULDER |
| 51 | PRESS FORMED PART |
| 53 | TOP PORTION |
| 55 | SIDE WALL PORTION |
| 57 | FLANGE PORTION |
| 59 | MOUNTING FLANGE PORTION |
| 59a | TOP-SIDE MOUNTING FLANGE PORTION |
| 61 | PUNCH SHOULDER |
| 63 | DIE SHOULDER |
| 65 | LONGITUDINAL-DIRECTION END-PORTION MOUNTING PORTION |
| 71 | PRESS FORMED PART |
| 73 | TOP PORTION |
| 75 | SIDE WALL PORTION |

**Claims**

1.  A shape change prediction method for a press formed part for predicting a shape change of the press formed part over time after springback at a moment of a release from a press-forming die, the shape change prediction method comprising:

    a shape/residual stress immediately after the springback acquisition step of acquiring a shape and a residual stress of the press formed part immediately after the springback by a springback analysis of the press formed part;
    a residual stress relaxation/reduction setting step of setting a value of a residual stress relaxed and reduced from the acquired residual stress to all bent portions or a part of the bent portions in the press formed part immediately after the springback; and
    a shape analysis step of determining a shape in which moments of force are balanced for the press formed part in which the value of the residual stress relaxed and reduced in the bent portions is set.

2.  The shape change prediction method for a press formed part according to claim 1, wherein the bent portions are punch shoulders configured to connect a top portion and side wall portions in the press formed part including the top portion and the side wall portions.

3.  The shape change prediction method for a press formed part according to claim 1, wherein the bent portions are punch shoulders configured to connect a top portion and side wall portions in the press formed part including the top portion, the side wall portions, and flange portions, and/or die shoulders configured to connect the side wall portions and the flange portions.

4.  The shape change prediction method for a press formed part according to any one of claims 1 to 3, wherein a blank used for press forming of the press formed part is a metal sheet having tensile strength of a 150 MPa grade or higher and a 2000 MPa grade or lower.

# FIG.1

START

SHAPE/RESIDUAL STRESS IMMEDIATELY AFTER SPRINGBACK ACQUISITION STEP —— S1

RESIDUAL STRESS RELAXATION/REDUCTION SETTING STEP —— S3

SHAPE ANALYSIS STEP —— S5

END

# FIG.2

(a) PERSPECTIVE VIEW

(b) TOP VIEW

# FIG.3

21

29
23
25
31
27

LONGITUDINAL
DIRECTION

EVALUATION
POINT b

WIDTH
DIRECTION

(a) PERSPECTIVE VIEW

21

23
29
25
31
27

EVALUATION
POINT b

LONGITUDINAL
DIRECTION

(b) TOP VIEW

# FIG.4

41

47

43

45

EVALUATION
POINT c

LONGITUDINAL
DIRECTION

WIDTH
DIRECTION

# FIG.5

(a) PERSPECTIVE VIEW

(b) TOP VIEW

# FIG.6

# FIG.7

# FIG.8

# FIG.9

OUTER SIDE
OF BEND

THICKNESS
CENTER LINE

TENSILE
STRESS

9

INNER SIDE OF BEND

COMPRESSIVE
STRESS

CENTER OF
CURVATURE OF BEND

(a) IMMEDIATELY AFTER PRESS
FORMING (FORMING BOTTOM
DEAD CENTER)

COMPRESSIVE
STRESS

9

TENSILE
STRESS

(b) IMMEDIATELY AFTER
SPRINGBACK

COMPRESSIVE
STRESS IS
RELAXED

9

TENSILE
STRESS IS
RELAXED

(c) AFTER ELAPSE OF TIME

FURTHER

# FIG.10

1

3   9

ANGLE
CHANGE

5

(SHAPE AFTER
STRESS RELAXATION)

ANGLE
CHANGE   7

EVALUATION
POINT a

(FORMING
BOTTOM DEAD
CENTER SHAPE)

11

## INTERNATIONAL SEARCH REPORT

| International application No. |
|---|
| PCT/JP2020/037620 |

**A. CLASSIFICATION OF SUBJECT MATTER**
B21D 22/00(2006.01)i
FI: B21D22/00
According to International Patent Classification (IPC) or to both national classification and IPC

**B. FIELDS SEARCHED**

Minimum documentation searched (classification system followed by classification symbols)
B21D22/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | LIM, Hojun, "Time-dependent Springback", International Journal of Material Forming, 03 April 2008, Issue 1, 157-160, page 159, right column to page 160, right column | 1-4 |
| Y | JP 2008-55476 A (NIPPON STEEL CORP.) 13 March 2008 (2008-03-13) paragraphs [0065], [0105], fig. 28 | 1-4 |
| Y | JP 6-79372 A (AVCO CORP.) 22 March 1994 (1994-03-22) paragraphs [0036]-[0037] | 1-4 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 20 November 2020 (20.11.2020) | 01 December 2020 (01.12.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| International application no. |
| --- |
| PCT/JP2020/037620 |

| Patent Documents referred in the Report | Publication Date | Patent Family | Publication Date |
| --- | --- | --- | --- |
| JP 2008-55476 A | 13 Mar. 2008 | US 2010/0005845 A1 paragraphs [0226], [0305], fig. 37 EP 2058062 A1 MX 2009002150 A KR 10-2009-0046906 A CN 102708222 A BR PI0716142 A2 | |
| JP 6-79372 A | 22 Mar. 1994 | US 5341303 A column 10, line 59 to column 11, line 21 DE 69202026 T2 ES 2041618 T1 AU 1962592 A MX 9204654 A KR 10-1993-0003993 A | |

**EP 4 104 946 A1**

**REFERENCES CITED IN THE DESCRIPTION**

**Patent documents cited in the description**

- JP 5795151 B
- JP 5866892 B
- JP 2013113144 A